(19)

Europäisches Patentamt
European Patent Office
Office européen des brevets

(11) **EP 4 471 457 A1**

(12) **EUROPEAN PATENT APPLICATION**
published in accordance with Art. 153(4) EPC

(43) Date of publication:
**04.12.2024  Bulletin 2024/49**

(21) Application number: **22923090.9**

(22) Date of filing: **14.04.2022**

(51) International Patent Classification (IPC):
***G01S 13/58*** (2006.01)

(86) International application number:
**PCT/CN2022/086823**

(87) International publication number:
**WO 2023/142272 (03.08.2023 Gazette 2023/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **29.01.2022  CN 202210110667**

(71) Applicant: **Nanjing Hawkeye Technology Co., Ltd Nanjing, Jiangsu 211111 (CN)**

(72) Inventors:
• **GUO, Kunpeng**
  **Nanjing, Jiangsu 211111 (CN)**
• **WU, Jing**
  **Nanjing, Jiangsu 211111 (CN)**
• **WANG, Shaolong**
  **Nanjing, Jiangsu 211111 (CN)**
• **MAI, Jianchun**
  **Nanjing, Jiangsu 211111 (CN)**
• **FENG, Youhuai**
  **Nanjing, Jiangsu 211111 (CN)**
• **ZHANG, Liao**
  **Nanjing, Jiangsu 211111 (CN)**

(74) Representative: **Nederlandsch Octrooibureau P.O. Box 29720 2502 LS The Hague (NL)**

(54) **VELOCITY AMBIGUITY RESOLUTION METHOD AND APPARATUS FOR MOVING TARGET, ELECTRONIC DEVICE, AND STORAGE MEDIUM**

(57)    A velocity ambiguity resolution method and apparatus for a moving target, an electronic device, and a storage medium. The method comprises: acquiring echo signals of a same moving target received by a first group of virtual multiplexing array elements and a second group of multiplexing array elements in an antenna array, wherein a pulse signal period corresponding to the first group of virtual multiplexing array elements is different from that corresponding to the second group of virtual multiplexing array elements (101); acquiring, according to the echo signals, a first measured motion phase difference corresponding to the first group of virtual multiplexing array elements and a second measured motion phase difference corresponding to the second group of virtual multiplexing array elements (102); calculating the Doppler frequency of the moving target according to the two measured motion phase differences (103); and calculating the current velocity of the moving target according to the Doppler frequency (104). Thus, the technical problem that it is difficult to accurately measure the velocity of a moving target due to ambiguity caused by the moving target crossing multiple range units within an echo accumulation time during radar-based velocity measurement and the corresponding Doppler response exceeding a frequency range can be solved.

Acquire echo signals of a same moving target received by a first group of virtual multiplexing array elements and a second group of multiplexing array elements in an antenna array consisting of multiple transmitting antennas and multiple receiving antennas, wherein a pulse signal period corresponding to the first group of virtual multiplexing array elements is different from that corresponding to the second group of virtual multiplexing array elements — 101

Acquire, according to the echo signals, a first measured motion phase difference corresponding to the first group of virtual multiplexing array elements and a second measured motion phase difference corresponding to the second group of virtual multiplexing array elements — 102

Calculate the Doppler frequency of the moving target according to the first measured motion phase difference and the second measured motion phase difference — 103

Calculate the current velocity of the moving target according to the Doppler frequency — 104

Figure 1

## Description

### TECHNICAL FIELD

The present invention relates to the technical field of radar signal processing, especially to a velocity defuzzification method and apparatus for moving target, electronic device, and storage medium.

### BACKGROUND

In the field of wireless communication, antenna technology can exponentially enhance the throughput, transmission range, and spectrum efficiency of communication systems without increasing the bandwidth, so it is widely applied in the field of Mobile Internet of Things. In recent years, Multiple-Input Multiple-Output (MIMO) technology has been widely applied in radar in order to improve the detection performance and calculation accuracy. MIMO technology refers to the use of multiple transmitting antennas at the transmitting end and multiple receiving antennas at the receiving end, enabling signals transmitting through a plurality of channels composed of the transmitting end and the receiving end, which can make full use of space resources, improve the system channel capacity and improve the communication quality.

The MIMO radar velocity measurement system transmits mutually orthogonal pulse signals through each element of the transmitting array which do not interfere with each other, and uses the frequency shift of echo signals of pulse signals to detect the moving direction and velocity of the moving target. However, in the prior art, there are some technical issues of velocity fuzzification and small measurement range when measuring velocity through MIMO radar systems.

On the one hand, when Pulse- Doppler radar operates at medium to low repetition frequency, observation targets moving at high velocitys will move across multiple range units during the echo accumulation time, that is, the moving target has already crossed multiple range units during the angle estimation process, resulting in phase difference in the waveform, and the corresponding Doppler effect extends beyond a frequency range, resulting in fuzzification. As a result, the velocity of moving target analyzed by fuzzy Doppler image is not accurate, that is, it is difficult to measure the true velocity of moving targets accurately.

On the other hand, according to the conventional velocity measurement method based on MIMO radar, when there are a large number of transmitting antennas, the maximum defuzzificated velocity range that can be measured will be decreased, which can not meet the needs of velocity measurement for high-velocity moving targets.

### TECHNICAL PROBLEM

The invention provides a velocity defuzzification method and apparatus for moving target, electronic device, and storage medium, aiming to effectively solve the technical problem in the prior art that the radar operates at medium to low repetition frequency, observation targets moving at high velocity will move across multiple range units during the echo accumulation time, and the waveform will produce phase difference, which makes it difficult to accurately measure the true velocity of moving targets.

### TECHNICAL SOLUTIONS

According to one aspect of the invention, the invention provides a velocity defuzzification method for moving target, the method comprises the steps of:

acquiring echo signals of a same moving target received by a first group of virtual multiplexing array elements and a second group of multiplexing array elements in an antenna array consisting of the plurality of transmitting antennas and the plurality of receiving antennas, wherein a pulse signal period corresponding to the first group of virtual multiplexing array elements is different from that corresponding to the second group of virtual multiplexing array elements;

acquiring, according to the echo signals, a first measured motion phase difference corresponding to the first group of virtual multiplexing array elements and a second measured motion phase difference corresponding to the second group of virtual multiplexing array elements;

calculating the Doppler frequency of the moving target according to the first measured motion phase difference and the second measured motion phase difference;

calculating the current velocity of the moving target according to the Doppler frequency.

Further, the first group of virtual multiplexing array elements comprises two transmitting antennas combined with at least one receiving antenna, the second group of virtual multiplexing array elements also comprises two transmitting antennas combined with at least one receiving antenna.

Further, the first group of virtual multiplexing array elements comprises a first target transmitting antenna and a second target transmitting antenna combined with at least one receiving antenna, the second group of virtual multiplexing array elements comprises the second target transmitting antenna and a third target transmitting antenna combined with at least one receiving antenna, and the signal period of the pulse signal transmitted by the second target transmitting antenna is different from that of the pulse signal transmitted by the third target transmitting antenna.

Further, the first target transmitting antenna and the second target transmitting antenna are adjacent in transmission sequences, the second target transmitting antenna and the third target transmitting antenna are adjacent in transmission sequences.

Further, the step of acquiring, according to the echo signals, a first measured motion phase difference corresponding to the first group of virtual multiplexing array elements and a second measured motion phase difference corresponding to the second group of virtual multiplexing array elements, comprises:

generating range-Doppler images of each channel corresponding to the first group of virtual multiplexing array elements and range-Doppler images of each channel corresponding to the second group of virtual multiplexing array elements according to the echo signals, and performing incoherent accumulation on the range-Doppler image;

obtaining, from the incoherent accumulated range-Doppler images, the first target range Doppler unit position data of the moving target in each channel corresponding to the first group of virtual multiplexing array elements and the second target range Doppler unit position data of the moving target in each channel corresponding to the second group of virtual multiplexing array elements;

obtaining the first measured motion phase difference according to the complex data of the first target range Doppler unit position data, and obtaining the second measured motion phase difference according to the complex data of the second target range Doppler unit position data.

Further, the step of obtaining the first measured motion phase difference according to the complex data of the first target range Doppler unit position data, and obtaining the second measured motion phase difference according to the complex data of the second target range Doppler unit position data, comprises:

obtaining a plurality of motion phase differences for each channel according to the complex data of the first target range Doppler unit position data in each channel corresponding to the first group of virtual multiplexing array elements, and taking the average of the plurality of motion phase differences as the first measured motion phase difference; obtaining a plurality of motion phase differences for each channel according to the complex data of the second target range Doppler unit position data in each channel corresponding to the second group of virtual multiplexing array elements, and taking the average of the plurality of motion phase differences as the second measured motion phase difference.

Further, the step of obtaining a plurality of motion phase differences for each channel according to the complex data of the first target range Doppler unit position data in each channel corresponding to the first group of virtual multiplexing array elements, and taking the average of the plurality of motion phase differences as the first measured motion phase difference, comprises:

for each channel corresponding to the first group of virtual multiplexing array elements, if the complex datas of the target range Doppler unit position data in different channels corresponding to the pulse signal transmitted by one of the two transmitting antennas which constitute the first group of virtual multiplexing array elements are expressed as $\alpha_1, \alpha_2, \alpha_3, \cdots, \alpha_n$, and the complex datas of the target range Doppler unit position data in different channels corresponding to the pulse signal transmitted by the other one of the two transmitting antennas which constitute the first group of virtual multiplexing array elements are expressed as $\beta_1, \beta_2, \beta_3, \cdots, \beta_n$, then calculating the first measured motion phase difference $\psi_1$ according to the following equation:

$$\psi_1 = \frac{\beta_1 \cdot \alpha_1^* + \beta_2 \cdot \alpha_2^* + \cdots + \beta_n \cdot \alpha_n^*}{n},$$

where " * " represents a conjugate operation, and n represents total number of channels corresponding to the first group of virtual multiplexing array elements.

Further, the step of obtaining a plurality of motion phase differences for each channel according to the complex data of the second target range Doppler unit position data in each channel corresponding to the second group of virtual multiplexing array elements, and taking the average of the plurality of motion phase differences as the second measured motion phase difference, comprises:

for each channel corresponding to the second group of virtual multiplexing array elements, if the complex data of the target range Doppler unit position data in different channels corresponding to the pulse signal transmitted by one of the two transmitting antennas which constitute the second group of virtual multiplexing array elements are expressed as $\chi_1, \chi_2, \chi_3, \cdots, \chi_n$, and the complex data of the target range Doppler unit position data in different channels corresponding to the pulse signal transmitted by the other one of the two transmitting antennas which constitute the second group of virtual multiplexing array elements are expressed as $\delta_1, \delta_2, \delta_3, \cdots, \delta_n$, then calculating the second measured motion phase difference $\psi_2$ according to the following equation:

$$\psi_2 = \frac{\chi_1 \cdot \delta_1^* + \chi_2 \cdot \delta_2^* + \cdots + \chi_n \cdot \delta_n^*}{n},$$

where " * " represents a conjugate operation, and n represents total number of channels corresponding to the second group of virtual multiplexing array elements.

Further, the step of calculating the Doppler frequency of the moving target according to the first measured motion phase difference and the second measured motion phase difference, comprises:

calculating the differential phase difference according to the following equation:

$$\Delta\psi = \psi_1^* \cdot \psi_2,$$

where $\Delta\psi$ represents the differential phase difference, $\psi_1$ represents the first measured motion phase difference, $\psi_2$ represents the second measured motion phase difference, " * " represents a conjugate operation.

Further, the step of calculating the Doppler frequency of the moving target according to the first measured motion phase difference and the second measured motion phase difference, further comprises:

calculating the phase angle of the differential phase difference;
calculating the Doppler frequency of the moving target according to the phase angle.

Further, the step of calculating the Doppler frequency of the moving target according to the first measured motion phase difference and the second measured motion phase difference, further comprises:

calculating the Doppler frequency of the moving target according to the following equation:

$$f_d = \frac{angle(\Delta\psi)}{2 \cdot \pi \cdot \Delta T},$$

where $f_d$ represents the Doppler frequency of the moving target, the function angle() is to return the phase angle of a vector, and the unit of the phase angle is radians, $\Delta\psi$ represents the differential phase difference, $\Delta T$ represents the difference between the pulse signal period corresponding to the first group of virtual multiplexing array elements and the pulse signal period corresponding to the second group of virtual multiplexing array elements.

Further, the step of calculating the current velocity of the moving target according to the Doppler frequency, comprises:

calculating the current velocity of the moving target according to the following equation:

$$V = -f_d \cdot \lambda / 2,$$

where V represents the current velocity of the moving target, $f_d$ represents the Doppler frequency of the moving target, $\lambda$ represents wavelength.

According to another aspect of the invention, the invention provides a velocity defuzzification apparatus for moving target, the apparatus is applied in a MIMO radar, the radar comprises a plurality of transmitting antennas which are time division multiplexed and a plurality of receiving antennas which are time division multiplexed, wherein the apparatus comprises:

a signal transmission module, configured to acquire echo signals of a same moving target received by a first group of virtual multiplexing array elements and a second group of multiplexing array elements in an antenna array comprising the plurality of transmitting antennas and the plurality of receiving antennas, wherein a pulse signal period corresponding to the first group of virtual multiplexing array elements is different from that corresponding to the second group of virtual multiplexing array elements;

a motion phase difference acquisition module, configured to acquire a first measured motion phase difference corresponding to the first group of virtual multiplexing array elements and a second measured motion phase difference corresponding to the second group of virtual multiplexing array elements according to the echo signals;

a Doppler frequency calculation module, configured to calculate the Doppler frequency of the moving target according to the first measured motion phase difference and the second measured motion phase difference;

a velocity calculation module, configured to calculate the current velocity of the moving target according to the Doppler frequency.

According to another aspect of the invention, the invention further provides an electronic device, comprising a memory, a processor, and a computer program stored in the memory and capable of running on the processor, the processor is configured to implement steps of the velocity defuzzification method for moving target as described in the first aspect above when executing the program.

According to another aspect of the invention, the invention further provides a non transient computer-readable storage medium, with a computer program stored thereon, the computer program is configured to implement steps of the velocity defuzzification method for moving target as described in the first aspect above when being executed by the processor.

## BENEFICIAL EFFECTS

At least the following technical effects can be achieved through one or more of the above embodiments of the invention:

In the disclosed technical solution of the present invention, the MIMO radar system adopts the time-division transmission method, and there are multiple groups of multiplexing array elements in an antenna array comprising multiple transmitting antennas and multiple receiving antennas, for the same group of virtual multiplexing array elements, the motion phase difference between the echo signals of different pulse signals only arises from the motion velocity of the moving target, not from the inter-element spacing. Therefore, based on echo signals returned from the same moving target by the pulse signal of the first group of virtual multiplexing array elements, it is possible to calculate a first measured motion phase difference corresponding to the first group of virtual multiplexing array elements, similarly it is possible to calculate a second measured motion phase difference corresponding to the second group of virtual multiplexing array elements, and the current velocity of the moving target can be calculated according to the measured motion phase difference corresponding to two groups of virtual multiplexing array elements. Therefore, the velocity measurement method of the present invention can directly calculate the current velocity of the moving target by the measured motion phase difference of the echo signals corresponding to virtual multiplexing array elements, without the need for inter-element spacing correlation. This method effectively improves the accuracy of velocity measurement, expands the velocity measurement range, and simplifies the velocity measurement calculation process, thereby achieving a technical effect of optimizing the velocity measurement performance of MIMO radar.

## BRIEF DESCRIPTION OF THE DRAWINGS

Based on the accompanying drawings, a detailed description of the specific implementation method of the present invention will make the technical solution and other beneficial effects of the present invention obvious.

Figure 1 is a flowchart of the steps of a velocity defuzzification method for moving target provided in an embodiment of the present invention;

Figure 2 is a schematic diagram of a virtual array without multiplexing array elements;

Figure 3 is a schematic diagram of a virtual array with multiplexing array elements provided in an embodiment of the present invention;

Figure 4 is a waveform schematic diagram of a pulse sequence provided in an embodiment of the present invention;

Figure 5 is a schematic diagram of the structure of a velocity defuzzification apparatus for moving target provided in an embodiment of the present invention.

## DETAILED WAYS OF THE PRESENT INVENTION

The following will provide a clear and complete description of the technical solution in the embodiments of the present invention in combination with the accompanying drawings. Obviously, the embodiments described are only partial embodiments of the invention and not all embodiments. Based on embodiments of the invention, all other embodiments obtained by persons skilled in the art without creative labor fall within the scope of protection of the invention.

In the description of the present invention, it should be noted that, unless otherwise expressly specified and limited, the term "and/or" in this article is only an association relation describing related objects, indicating that there can be three kinds of relations, for example, A and/or B, can mean: there is A alone, there is A and B simultaneously, and there is B alone. In addition, the character "/" in this paper, without special explanation, generally indicates that the associated object is an "or" relationship.

The following technical terms involved in the invention are described:
MIMO (Multiple-Input Multiple-Output) technology refers to the use of multiple transmitting antennas and multiple receiving antennas at the transmitting end and at the receiving end respectively, enabling signals transmitting through a plurality of channels, which can improve the communication quality. It can make full use of space resources, achieve multiple transmission and reception through multiple antennas, and can exponentially increase the system channel capacity without increasing spectrum resources and antenna transmission power.

TDM (Time Division Multiplexing) technology is a communication technique that interweaves different signals into different time periods, transmits them along the same channel, and extracts and restores the signals from each time period to the original signal at the receiving end.

For moving target, the velocity ambiguity in radar velocity measurement refers to the phenomenon where the measured target velocity is confused due to spectral overlap when pulse Doppler radar operates at medium and low repetition frequency, making it difficult to distinguish the true velocity of the target.

For example, in a radar system using TDM technology, the maximum unambiguous velocity is calculated according to the following equation:

$$V_{\max} = \frac{\lambda}{4} \cdot PRF \,,$$

Where $V_{\max}$ represents the maximum unambiguous velocity, $\lambda$ represents wavelength, $PRF$ represents pulse repetition frequency.

Assuming that the number of transmitting antennas of MIMO radar is N, the cycle of a single Chirp signal is $T_c$, and the radar system adopts the time division transmission mode to transmit pulse signals, then the total time for each transmitting antenna to transmit a waveform once is $N \cdot T_c$, $N \cdot T_c$ is defined as a pulse sequence period, and the pulse repetition frequency is the reciprocal of a pulse sequence period, the pulse repetition frequency is calculated according to the following equation:

$$PRF = \frac{1}{N \cdot T_c} \,,$$

According to the calculation equation of the pulse repetition frequency, it can be found that when there are more transmitting antennas in MIMO radar, the corresponding pulse repetition frequency $PRF$ is smaller, and the unambiguous velocity range $-V_{\max} \sim V_{\max}$ that the radar system can characterize will be relatively small, and the detection of moving targets with large velocity is prone to significant deviations.

In response to the above-mentioned technical problems, the present invention provides an improved velocity defuzzification method and apparatus for moving target, electronic device, and storage medium. In the technical solution provided in the present invention, for the same group of virtual multiplexing array elements, the motion phase difference between the echo signals of different pulse signals only arises from the motion velocity of the moving target, not from the inter-element spacing. Therefore, the technical solution provided by the present invention can expand the maximum unambiguous velocity range of moving targets measured by radar and effectively improve the accuracy of measuring the velocity of moving targets.

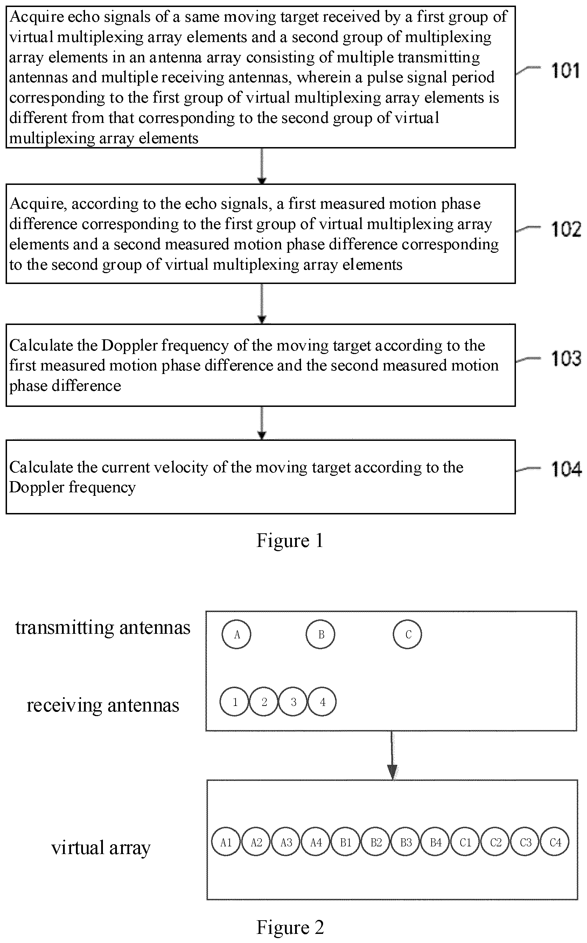

The following describes the velocity defuzzification method and apparatus for moving target, electronic device, and storage medium of the present invention in conjunction with Figures 1 to 5.

As shown in Figure 1, Figure 1 is a flowchart of the steps of a velocity defuzzification method for moving target provided in an embodiment of the present invention, the velocity defuzzification method for moving target, the method is applied in a MIMO radar with multiple transmitting antennas and multiple receiving antennas, the method comprises :

Step 101: Acquire echo signals of a same moving target received by a first group of virtual multiplexing array elements and a second group of multiplexing array elements in an antenna array consisting of multiple transmitting antennas and multiple receiving antennas, wherein a pulse signal period corresponding to the first group of virtual multiplexing array elements is different from that corresponding to the second group of virtual multiplexing array elements;

Step 102: Acquire, according to the echo signals, a first measured motion phase difference corresponding to the first group of virtual multiplexing array elements and a second measured motion phase difference corresponding to the second group of virtual multiplexing array elements;

Step 103: Calculate the Doppler frequency of the moving target according to the first measured motion phase difference and the second measured motion phase difference;

Step 104: Calculate the current velocity of the moving target according to the Doppler frequency.

The following is a specific description of the basic working principles based on the above steps 101-104.

In some examples, In MIMO radar systems, when measuring the current velocity of a moving target, the transmitting antenna sends a pulse signal to the moving target. After receiving the pulse signal, the moving target returns an echo signal. The radar system obtains the echo signal returned by the moving target and calculates the current velocity of the moving target based on the phase difference of the echo signal.

In some examples, in radar systems with multiple antennas such as MIMO radar, the number of transmitting antennas is generally at least 3. For example, automotive millimeter-wave radar systems typically expand based on the foundation of three transmitting antennas and four receiving antennas according to different requirements. When there are multiple transmit-receive antennas in a radar system, the combination of multiple transmitting antennas and multiple receiving antennas forms an antenna array, and in some antenna arrays, virtual multiplexing elements are present. In addition, in special cases, when the number of transmitting antennas is less than 3, an equivalent virtual multiplexing array element can also be achieved by driving the same antenna to transmit pulse signals multiple times in a time division multiplexing mode.

In some examples, in radar systems, the motion phase difference between the echo signals received by virtual multiplexing array elements only arises from the motion velocity of the moving target, not from the inter-element spacing, in other words, in the same group of virtual multiplexing array elements, the motion phase difference between the echo signals corresponding to different pulse signals only arises from the motion velocity of the moving target, not from the inter-element spacing. Therefore, based on echo signals returned from the same moving target by the pulse signal of the first group of virtual multiplexing array elements, it is possible to calculate a first measured motion phase difference corresponding to the first group of virtual multiplexing array elements, similarly based on echo signals returned from the same moving target by the pulse signal of the second group of virtual multiplexing array elements, it is possible to calculate a second measured motion phase difference corresponding to the second group of virtual multiplexing array elements.

In addition, in some examples, in MIMO radar systems, the frequency shift of the echo signal corresponding to the transmitted pulse signal is usually used to detect the moving direction and velocity of the moving target. Specifically, the phase difference can be calculated based on the echo signals, and the Doppler frequency can be calculated based on the phase difference. Once the Doppler frequency is obtained, the current velocity of the moving target can be obtained based on relevant calculation formulas.

In this embodiment, the phase difference between the echo signals returned on moving targets by different pulse signals corresponding to the same group of virtual multiplexing array elements only arises from the motion of the moving target, not from the inter-element spacing, therefore, the current velocity of the moving target can be directly calculated by the motion phase difference of the echo signals without the need for inter-element spacing correlation, which can effectively solve velocity ambiguity, improve the accuracy of velocity measurement, expand the velocity measurement range, and simplify the complexity of velocity calculation.

Further, the first group of virtual multiplexing array elements comprises two transmitting antennas combined with at least one receiving antenna, the second group of virtual multiplexing array elements also comprises two transmitting antennas combined with at least one receiving antenna.

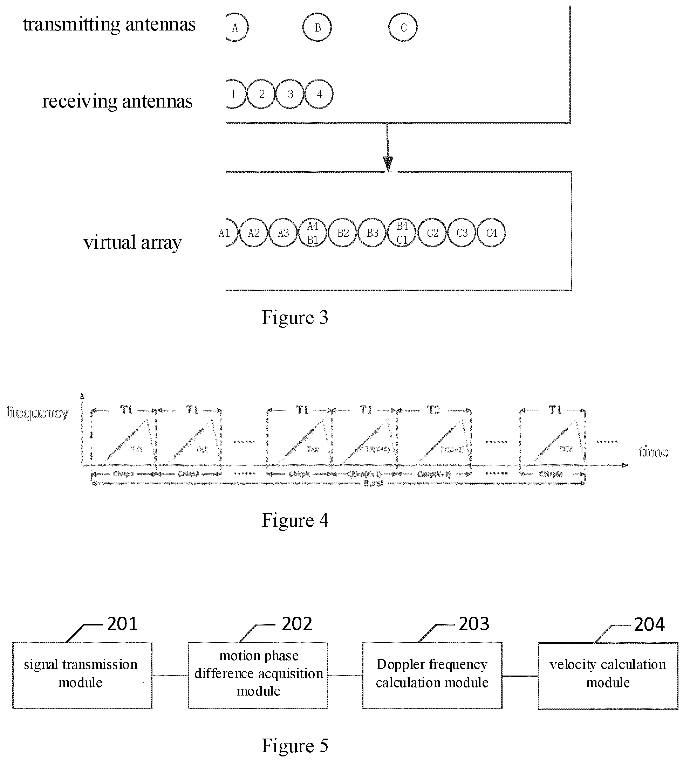

In some examples, in a radar system, multiple transmitting antennas and multiple receiving antennas can form multiple virtual multiplexing array elements. Specifically, when the distance between transmitting antennas is greater than or equal to the size of receiving antennas, there are no multiplexing array elements in the virtual array. When the distance between transmitting antennas is smaller than the size of receiving antennas, there are multiple multiplexing array elements in the virtual antenna array. The following specific explanation will be provided in conjunction with Figures 2 and 3, wherein the Figure 2 is a schematic diagram of a virtual array without multiplexing array elements, and the Figure 3 is a schematic diagram of a virtual array with multiplexing array elements provided in an embodiment of the present invention.

In the example of Figure 2, taking a uniform array of 3 transmitting antennas and 4 receiving antennas as an example, the distance between transmitting antennas is greater than the size of receiving antennas, therefore there are no multiplexing array elements in the virtual antenna array comprising 3 transmitting antennas and 4 receiving antennas.

In the example of Figure 2, taking a uniform array of 3 transmitting antennas and 4 receiving antennas as an example, the distance between transmitting antennas is smaller than the size of receiving antennas. In this virtual antenna array, the position of virtual array element A4 between transmitting antenna A and receiving antenna 4 is consistent with the position of virtual array element B1 between transmitting antenna B and receiving antenna 1, therefore, virtual array element A4 and virtual array element B1 are a group of multiplexing array elements. In addition, the position of virtual array element B4 between transmitting antenna B and receiving antenna 4 is consistent with the position of virtual array element C1 between transmitting antenna C and receiving antenna 1, therefore, virtual array element B4 and virtual array element C1 are a group of multiplexing array elements.

Further, in the velocity defuzzification method for moving target disclosed in the present invention, the first group of virtual multiplexing array elements comprises a first target transmitting antenna and a second target transmitting antenna combined with at least one receiving antenna, the second group of virtual multiplexing array elements comprises the second target transmitting antenna and a third target transmitting antenna combined with at least one receiving antenna, and the signal period of the pulse signal transmitted by the second target transmitting antenna is different from that of the pulse signal transmitted by the third target transmitting antenna.

In some examples, two transmitting antennas and at least one receiving antenna can form a group of virtual multiplexing array elements, for example, in the virtual array shown in Figure 3, there are at least one group of multiplexing array elements in the virtual array elements comprising transmitting antenna A, transmitting antenna B and at least one receiving antenna, and there are at least one group of multiplexing array elements in the virtual array elements comprising transmitting antenna B, transmitting antenna C and at least one receiving antenna.

Further, in the velocity defuzzification method for moving target disclosed in the present invention, the MIMO radar uses time-division transmission to transmit pulse sequences. The time period required for all antennas to sequentially transmit one pulse signal is one Burst period (i.e. one pulse sequence period), and the time period of one Burst period is divided into multiple Chirp signal periods, wherein multiple Chirp signal periods within a Burst period can be the same or different, and there is only one antenna transmitting the pulse signal in each Chirp signal period. In the same pulse sequence period, the Chirp signal period when the second target transmitting antenna transmits the pulse signal is different from the Chirp signal period when the third target transmitting antenna transmits the pulse signal.

Further, in the velocity defuzzification method for moving target disclosed in the present invention, the first target transmitting antenna and the second target transmitting antenna are adjacent in transmission sequences, the second target transmitting antenna and the third target transmitting antenna are adjacent in transmission sequences. In other words, in one Burst period (one pulse sequence period), the Chirp signal period corresponding to the first target transmitting antenna is adjacent to the Chirp signal period corresponding to the second target transmitting antenna, and the Chirp signal period corresponding to the second target transmitting antenna is adjacent to the Chirp signal period corresponding to the third target transmitting antenna.

Figure 4 is a waveform schematic diagram of a pulse sequence provided in an embodiment of the present invention, wherein assuming the number of transmitting antennas in the radar is M and the number of receiving antennas is N, the layout of the transmitting antennas meets the requirements of the above array design, that is, the spacing between the transmitting antennas is smaller than the size of the receiving antennas, and the three transmitting antennas transmit continuously in a time division mode. As shown in Figure 4, the virtual array elements corresponding to the first target transmitting antenna TXK, the second target transmitting antenna TX(K+1), and the third target transmitting antenna TX(K+2) meet the array design requirements, and three target transmitting antennas continuously transmit waveforms in the same pulse sequence under time division transmission mode. Wherein the Chirp signal period of the pulse signals transmitted by the first target transmitting antenna TXK and the second target transmitting antenna TX(K+1) is T1, and the Chirp signal period of the pulse signals transmitted by the third target transmitting antenna TX(K+2) is T2.

Further, in the step 102, the step of acquiring, according to the echo signals, a first measured motion phase difference corresponding to the first group of virtual multiplexing array elements and a second measured motion phase difference corresponding to the second group of virtual multiplexing array elements, comprises:

Step 1021: Generate range-Doppler images of each channel corresponding to the first group of virtual multiplexing array elements and range-Doppler images of each channel corresponding to the second group of virtual multiplexing array elements according to the echo signals, and perform incoherent accumulation on the range-Doppler image.

In the velocity defuzzification method for moving target disclosed in the present invention, a channel for transmitting and receiving pulse signals is formed between each transmitting antenna and each receiving antenna. When each pulse signal on every channel reaches the moving target, the target returns an echo signal to the radar, and the radar system obtains echo signals from all channels and constructs a range-Doppler image based on the echo signals, wherein the range-Doppler image contains position data of moving targets corresponding to each channel.

The velocity defuzzification method for moving target disclosed in the present invention further comprises: Obtain range-Doppler images of each channel corresponding to the first group of virtual multiplexing array elements and range-Doppler images of each channel corresponding to the second group of virtual multiplexing array elements from the aforementioned range-Doppler images, and perform incoherent accumulation on the corresponding data in the obtained range Doppler images. Wherein the Range-Doppler (RD) imaging algorithm is based on Synthetic Aperture Radar (SAR) imaging algorithm, for example, it involves performing, on the enco data, range compression through the RD algorithm, azimuth FFT (Fast Fourier Transform), range migration correction, azimuth compression, and azimuth inverse FFT (Inverse Fast Fourier Transform) processing, and then the compressed data is outputted.

For example, for a moving target, the radar system transmits pulse signals based on the waveform shown in Figure 4 and performs range dimension sampling on the echo data within each Chirp signal period, the number of distance domain sampling points is Nr. If there are N receiving antennas within each Chirp signal period, a total of N channels of one-dimensional data are obtained, the same Burst waveform is transmitted Na times in a loop to obtain one frame of data, therefore, the data volume obtained from the pulse signals transmitted by the transmitting antenna TXK is two-dimensional data of size Nr * Na for N channels. Similarly, the pulse signals transmitted by the transmitting antenna TX(K+1) and the transmitting antenna TX(K+2) both obtain the two-dimensional data of size Nr * Na for N channels.

Separately perform two-dimensional FFT processing on the two-dimensional data of size Nr * Na for N channels obtained from the pulse signal transmitted by the transmitting antenna TXK to obtain N range-Doppler images, and perform incoherent accumulation on the data of these range-Doppler images. Similarly, separately perform two-dimensional FFT processing on the two-dimensional data of size Nr * Na for N channels obtained from the pulse signal transmitted by the transmitting antenna TX(K+1) and the transmitting antenna TX(K+2) to obtain N range-Doppler images separately, and perform incoherent accumulation on the data of these range-Doppler images.

Step 1022: Obtain the first target range Doppler unit position data of the moving target in each channel corresponding to the first group of virtual multiplexing array elements and the second target range Doppler unit position data of the moving target in each channel corresponding to the second group of virtual multiplexing array elements from the incoherent accumulated range-Doppler images.

Exemplarily, the velocity defuzzification method for moving target disclosed in the present invention further comprises: perform constant false alarm rate (CFAR) detection on the range-Doppler images after incoherent accumulation to obtain the unit position data of the range-Doppler unit corresponding to the moving target. Wherein the constant false alarm rate (CFAR) detection technique is technology that a radar system distinguishes the received signal from the receiver output and noise under the condition of maintaining a false alarm rate to determine the presence of moving target signals. In radar systems, various types of noise such as atmospheric noise, artificial noise, internal noise, and clutter exist at the receiver output. The signal is typically superimposed on the noise. Therefore, it is necessary to employ detection techniques to determine the presence of moving target signals under the condition of noise or signals plus noise outputted at the receiver output.

Step 1023: Obtain the first measured motion phase difference according to the complex data of the first target range Doppler unit position data, and obtain the second measured motion phase difference according to the complex data of the second target range Doppler unit position data.

Further, in the step 1023, the step of obtaining the first measured motion phase difference according to the complex data of the first target range Doppler unit position data, and obtaining the second measured motion phase difference according to the complex data of the second target range Doppler unit position data, comprises:
obtain a plurality of motion phase differences for each channel according to the complex data of the first target range Doppler unit position data in each channel corresponding to the first group of virtual multiplexing array elements, and take the average of the plurality of motion phase differences as the first measured motion phase difference;

Obtain a plurality of motion phase differences for each channel according to the complex data of the second target range Doppler unit position data in each channel corresponding to the second group of virtual multiplexing array elements, and take the average of the plurality of motion phase differences as the second measured motion phase difference.

Further, the step of obtaining a plurality of motion phase differences for each channel according to the complex data of the first target range Doppler unit position data in each channel corresponding to the first group of virtual multiplexing array elements, and taking the average of the plurality of motion phase differences as the first measured motion phase difference, comprises:

For each channel corresponding to the first group of virtual multiplexing array elements, if the complex data of the target range Doppler unit position data in different channels corresponding to the pulse signal transmitted by one of the two transmitting antennas that constitute the first group of virtual multiplexing array elements are expressed as $\alpha_1, \alpha_2, \alpha_3, \cdots, \alpha_n$, and the complex data of the target range Doppler unit position data in different channels corresponding to the pulse signal transmitted by another one of the two transmitting antennas that constitute the first group of virtual multiplexing array elements are expressed as $\beta_1, \beta_2, \beta_3, \cdots, \beta_n$, then calculating the first measured motion phase difference $\psi_1$ according to

the following equation:

$$\psi_1 = \frac{\beta_1 \cdot \alpha_1^* + \beta_2 \cdot \alpha_2^* + \cdots + \beta_n \cdot \alpha_n^*}{n},$$

Where "*" represents a conjugate operation, and n represents total number of channels corresponding to the first group of virtual multiplexing array elements. Wherein two complex numbers with equal real parts and opposite imaginary parts are conjugate each other, if the conjugate operation is applied to a complex number, the result will be a conjugate complex number with the real part unchanged and the sign of the imaginary part reversed. For example, if a and b are real numbers and the complex number z=a+bj, then the conjugate complex number of the complex number z is z*=a - bj.

Further, the step of obtaining a plurality of motion phase differences for each channel according to the complex data of the second target range Doppler unit position data in each channel corresponding to the second group of virtual multiplexing array elements, and taking the average of the plurality of motion phase differences as the second measured motion phase difference, comprises:

For each channel corresponding to the second group of virtual multiplexing array elements, if the complex data of the target range Doppler unit position data in different channels corresponding to the pulse signal transmitted by one of the two transmitting antennas that constitute the second group of virtual multiplexing array elements are expressed as $\chi_1, \chi_2, \chi_3, \cdots, \chi_n$, and the complex data of the target range Doppler unit position data in different channels corresponding to the pulse signal transmitted by another one of the two transmitting antennas that constitute the second group of virtual multiplexing array elements are expressed as $\delta_1, \delta_2, \delta_3, \cdots, \delta_n$, then calculating the second measured motion phase difference $\psi_2$ according to the following equation:

$$\psi_2 = \frac{\chi_1 \cdot \delta_1^* + \chi_2 \cdot \delta_2^* + \cdots + \chi_n \cdot \delta_n^*}{n},$$

where "*" represents a conjugate operation, and n represents total number of channels corresponding to the second group of virtual multiplexing array elements.

The detailed description of the theoretical derivation principles and relevant expressions for the measured phase difference of the first group of virtual multiplexing elements and the measured phase difference of the second group of virtual multiplexing elements is provided below.

There is a relationship between the signal period T1 of the pulse signal transmitted by the first group of virtual multiplexing array elements and the signal period T2 of the pulse signal transmitted by the second group of virtual multiplexing array elements:

$$\Delta T = T2 - T1,$$

Wherein, $\Delta T$ represents the difference between the pulse signal period corresponding to the first group of virtual multiplexing array elements and the pulse signal period corresponding to the second group of virtual multiplexing array elements, T1 represents the signal period of the pulse signal corresponding to the first group of virtual multiplexing array elements, T2 represents the signal period of the pulse signal corresponding to the first group of virtual multiplexing array elements.

When the radar system adopts the time division transmission mode to transmit pulse signals, the phase difference in the echo data corresponding to adjacent pulse signals in the transmission sequences is mainly caused by the inter-element spacing and motion velocity of the target, the phase difference of the echo data can be calculated according to the following formula:

$$\psi = \exp(j \cdot 2\pi \cdot d \cdot \sin\theta) + \exp(j \cdot 4\pi \cdot v \cdot T / \lambda),$$

Wherein, the first term of the right-hand equation is the phase difference caused by the inter-element spacing, the second term of the right-hand equation is the phase difference caused by the current motion velocity of the target, j is a symbol for complex signals, d is the inter-element spacing, $\theta$ is the target angle, v is the current velocity of the moving

target, $\lambda$ is wavelength, T represents the signal period of the pulse signal transmitted.

According to the waveform design in the present invention, since there is no inter-element spacing within the same group of virtual multiplexing array elements, the phase difference in the echo data of the moving target corresponding to the pulse signals of the same group of virtual multiplexing array elements only arises from the motion velocity, not from the inter-element spacing. Wherein the first motion phase difference between the echo signals returned by the first group of virtual multiplexing array elements on the moving target satisfies the following equation:

$$\psi_3 = \exp(j \cdot 4\pi \cdot v \cdot T1 / \lambda) \,,$$

Wherein, $\psi_3$ represents the first motion phase difference, j represents a symbol for complex signals, v represents the current velocity of the moving target, $\lambda$ represents wavelength, T1 represents the signal period of the pulse signal corresponding to the first group of virtual multiplexing array elements.

Similarly, the second motion phase difference between the echo signals returned by the second group of virtual multiplexing array elements on the moving target satisfies the following equation:

$$\psi_4 = \exp(j \cdot 4\pi \cdot v \cdot T2 / \lambda) \,,$$

Wherein, $\psi_4$ represents the second motion phase difference, j represents a symbol for complex signals, v represents the current velocity of the moving target, $\lambda$ represents wavelength, T2 represents the signal period of the pulse signal corresponding to the second group of virtual multiplexing array elements.

As evident from the above, the measured phase difference of the first group of virtual multiplexing elements and the measured phase difference of the second group of virtual multiplexing elements is respectively related to the signal period of pulse signals transmitted severally and the current velocity of the moving target.

Further, in step 103, the step of calculating the Doppler frequency of the moving target according to the first measured motion phase difference and the second measured motion phase difference, comprises:

Calculate the differential phase difference according to the following equation:

$$\Delta\psi = \psi_1^* \cdot \psi_2 \,,$$

Where $\Delta\psi$ represents the differential phase difference, $\psi_1$ represents the first measured motion phase difference, $\psi_2$ represents the second measured motion phase difference, " * " represents a conjugate operation.

The theoretical expression for the differential phase difference is as follows:

$$\Delta\psi = \psi_3^* \cdot \psi_4 = \exp(j \cdot 4\pi \cdot v \cdot (T2 - T1) / \lambda) = \exp(j \cdot 4\pi \cdot v \cdot \Delta T / \lambda) \,,$$

Wherein, $\Delta\psi$ represents the differential phase difference, $\psi_3$ represents the first motion phase difference, $\psi_4$ represents the second motion phase difference, j represents a symbol for complex signals, v represents the velocity of the moving target, T1 represents the signal period of the pulse signal corresponding to the first group of virtual multiplexing array elements, T2 represents the signal period of the pulse signal corresponding to the second group of virtual multiplexing array elements, $\Delta T$ represents the difference between the pulse signal period corresponding to the first group of virtual multiplexing array elements and the pulse signal period corresponding to the second group of virtual multiplexing array elements, $\lambda$ is wavelength, " * " represents a conjugate operation.

Further, the step of calculating the Doppler frequency of the moving target according to the first measured motion phase difference and the second measured motion phase difference further comprises:

Calculate the phase angle of the differential phase difference;
Calculate the Doppler frequency of the moving target according to the phase angle.

For example, the phase angle of the corresponding vector can be calculated by differential phase difference, and the Doppler frequency can be calculated based on the phase angle.

Further, in step 103, the step of calculating the Doppler frequency of the moving target according to the first measured motion phase difference and the second measured motion phase difference further comprises:

Calculate the Doppler frequency of the moving target according to the following equation:

$$f_d = \frac{angle(\Delta\psi)}{2\cdot\pi\cdot\Delta T},$$

Where $f_d$ represents the Doppler frequency of the moving target, the function angle() serves the purpose of returning the phase angle of a vector, and the unit of the phase angle is radians, $\Delta_\psi$ represents the differential phase difference, $\Delta T$ represents the difference between the pulse signal period corresponding to the first group of virtual multiplexing array elements and the pulse signal period corresponding to the second group of virtual multiplexing array elements.

Further, the step of calculating the current velocity of the moving target according to the Doppler frequency, comprises:

Calculate the current velocity of the moving target according to the following equation:

$$V = -f_d \cdot \lambda / 2,$$

Where V represents the current velocity of the moving target, $f_d$ represents the Doppler frequency of the moving target, $\lambda$ represents wavelength.

As evident from the above, in the disclosed technical solution of the present invention, the maximum unambiguous velocity range for measuring the moving target can be derived from the following equation:

$$|4\pi \cdot v \cdot \Delta T / \lambda| \le \pi,$$

that is

$$-\frac{\lambda}{4\cdot\Delta T} \le V \le \frac{\lambda}{4\cdot\Delta T},$$

Wherein, V represents the velocity of measurable moving targets, $\Delta T$ represents the difference between the pulse signal period corresponding to the first group of virtual multiplexing array elements and the pulse signal period corresponding to the second group of virtual multiplexing array elements, $\lambda$ is wavelength.

In contrast, in conventional technical solutions, when the number of transmitting antennas is M and the number of receiving antennas is N in radar, according to the classic TDM-MIMO radar waveform transmission method, within a Burst period, assuming a single Chirp signal period is T1, according to the formula for calculating the unambiguous velocity range, the maximum unambiguous velocity range of the measurable moving target can be obtained as

$$-\frac{\lambda}{4\cdot M\cdot T1} \sim \frac{\lambda}{4\cdot M\cdot T1}.$$ As evident from the above, compared to conventional technical solutions, the disclosed technical solution of the present invention can increase the measurable unambiguous velocity range by $\dfrac{M\cdot T1}{\Delta T}$ times, wherein, it is possible to achieve the desired unambiguous velocity range in radar design by customizing the value of $\Delta T$.

Based on the same inventive concept as the velocity defuzzification method for moving target in the present embodiment, the embodiments of the present invention also provide a velocity defuzzification apparatus for moving target, the apparatus is applied in a MIMO radar, the radar comprises a plurality of transmitting antennas which are time division multiplexed and a plurality of receiving antennas which are time division multiplexed, referred to Figure 5, the apparatus comprises:

a signal transmission module 201, configured to acquire echo signals of a same moving target received by a first group of virtual multiplexing array elements and a second group of multiplexing array elements in an antenna array comprising the plurality of transmitting antennas and the plurality of receiving antennas, wherein a pulse signal period corresponding to the first group of virtual multiplexing array elements is different from that corresponding to the second group of virtual multiplexing array elements;

a motion phase difference acquisition module 202, configured to acquire a first measured motion phase difference corresponding to the first group of virtual multiplexing array elements and a second measured motion phase difference corresponding to the second group of virtual multiplexing array elements according to the echo signals;

a Doppler frequency calculation module 203, configured to calculate the Doppler frequency of the moving target according to the first measured motion phase difference and the second measured motion phase difference;

a velocity calculation module 204, configured to calculate the current velocity of the moving target according to the Doppler frequency.

Exemplarily, the first group of virtual multiplexing array elements comprises two transmitting antennas combined with at least one receiving antenna, the second group of virtual multiplexing array elements also comprises two transmitting antennas combined with at least one receiving antenna.

Exemplarily, the first group of virtual multiplexing array elements comprises a first target transmitting antenna and a second target transmitting antenna combined with at least one receiving antenna, the second group of virtual multiplexing array elements comprises the second target transmitting antenna and a third target transmitting antenna combined with at least one receiving antenna, and the signal period of the pulse signal transmitted by the second target transmitting antenna is different from that of the pulse signal transmitted by the third target transmitting antenna.

Exemplarily, the first target transmitting antenna and the second target transmitting antenna are adjacent in transmission sequences, the second target transmitting antenna and the third target transmitting antenna are adjacent in transmission sequences.

Exemplarily, the motion phase difference acquisition module 202 is further configured to:

generate range-Doppler images of each channel corresponding to the first group of virtual multiplexing array elements and range-Doppler images of each channel corresponding to the second group of virtual multiplexing array elements according to the echo signals, and perform incoherent accumulation on the range-Doppler image;

obtain the first target range Doppler unit position data of the moving target in each channel corresponding to the first group of virtual multiplexing array elements and the second target range Doppler unit position data of the moving target in each channel corresponding to the second group of virtual multiplexing array elements from the incoherent accumulated range-Doppler images;

obtain the first measured motion phase difference according to the complex data of the first target range Doppler unit position data, and obtain the second measured motion phase difference according to the complex data of the second target range Doppler unit position data.

Exemplarily, the motion phase difference acquisition module 202 is further configured to:

obtain a plurality of motion phase differences for each channel according to the complex data of the first target range Doppler unit position data in each channel corresponding to the first group of virtual multiplexing array elements, and take the average of the plurality of motion phase differences as the first measured motion phase difference;

obtain a plurality of motion phase differences for each channel according to the complex data of the second target range Doppler unit position data in each channel corresponding to the second group of virtual multiplexing array elements, and take the average of the plurality of motion phase differences as the second measured motion phase difference.

Exemplarily, the motion phase difference acquisition module 202 is further configured to:

for each channel corresponding to the first group of virtual multiplexing array elements, if the complex data of the target range Doppler unit position data in different channels corresponding to the pulse signal transmitted by one of the two transmitting antennas that constitute the first group of virtual multiplexing array elements are expressed as $\alpha_1, \alpha_2, \alpha_3, \cdots, \alpha_n$, and the complex datas of the target range Doppler unit position data in different channels corresponding to the pulse signal transmitted by the other one of the two transmitting antennas which constitute the first group of virtual multiplexing array elements are expressed as $\beta_1, \beta_2, \beta_3, \cdots, \beta_n$, then calculate the first measured motion phase difference $\psi_1$ according to the following equation:

$$\psi_1 = \frac{\beta_1 \cdot \alpha_1^{\;*} + \beta_2 \cdot \alpha_2^{\;*} + \cdots + \beta_n \cdot \alpha_n^{\;*}}{n}$$

where " * " represents a conjugate operation, and n represents total number of channels corresponding to the first group of virtual multiplexing array elements.

Exemplarily, the motion phase difference acquisition module 202 is further configured to:

for each channel corresponding to the second group of virtual multiplexing array elements, if the complex data of the target range Doppler unit position data in different channels corresponding to the pulse signal transmitted by one of the two transmitting antennas which constitute the second group of virtual multiplexing array elements are expressed as $\chi_1, \chi_2, \chi_3, \cdots, \chi_n$, and the complex datas of the target range Doppler unit position data in different channels corresponding to the pulse signal transmitted by the other one of the two transmitting antennas which constitute the second group of virtual multiplexing array elements are expressed as $\delta_1, \delta_2, \delta_3, \cdots, \delta_n$, then calculate the second measured motion phase difference $\psi_2$ according to the following equation:

$$\psi_2 = \frac{\chi_1 \cdot \delta_1^{\;*} + \chi_2 \cdot \delta_2^{\;*} + \cdots + \chi_n \cdot \delta_n^{\;*}}{n}$$

where " * " represents a conjugate operation, and n represents total number of channels corresponding to the second group of virtual multiplexing array elements.

Exemplarily, the Doppler frequency calculation module 203 is further configured to:

calculate the differential phase difference according to the following equation:

$$\Delta \psi = \psi_1^{\;*} \cdot \psi_2$$

where $\Delta\psi$ represents the differential phase difference, $\psi_1$ represents the first measured motion phase difference, $\psi_2$ represents the second measured motion phase difference, " * " represents a conjugate operation.

Exemplarily, the Doppler frequency calculation module 203 is further configured to:

calculate the phase angle of the differential phase difference;
calculate the Doppler frequency of the moving target according to the phase angle.

Exemplarily, the Doppler frequency calculation module 203 is further configured to:

calculate the Doppler frequency of the moving target according to the following equation:

$$f_d = \frac{angle(\Delta\psi)}{2 \cdot \pi \cdot \Delta T}$$

where $f_d$ represents the Doppler frequency of the moving target, the function angle() is to return the phase angle of a vector, and the unit of the phase angle is radians, $\Delta_\psi$ represents the differential phase difference, $\Delta T$ represents the difference between the pulse signal period corresponding to the first group of virtual multiplexing array elements and the pulse signal period corresponding to the second group of virtual multiplexing array elements.

Exemplarily, the velocity calculation module 204 is further configured to:

calculate the current velocity of the moving target according to the following equation:

$$V = -f_d \cdot \lambda / 2 \text{ ,}$$

where V represents the current velocity of the moving target, $f_d$ represents the Doppler frequency of the moving target, $\lambda$ represents wavelength.

In addition, the other aspects and implementation details of the velocity defuzzification apparatus for moving target are the same or similar to the velocity defuzzification method for moving target described earlier, and will not be repeated here.

According to another aspect of the invention, the invention further provides an electronic device, comprising a memory, a processor, and a computer program stored in the memory and capable of running on the processor, the processor is configured to implement any of the above-mentioned velocity defuzzification method for moving target.

According to another aspect of the invention, the invention further provides a storage medium, the storage medium stores multiple instructions, which are suitable for being loaded by a processor to execute any of the velocity defuzzification method for moving target as described above.

In summary, although the present invention has been disclosed in preferred embodiments as described above, the preferred embodiments are not intended to limit the present invention. Ordinary skilled persons in the art may make various changes and modifications without departing from the spirit and scope of the present invention. Therefore, the scope of protection of the present invention shall be subject to the scope defined by the claims.

**Claims**

1. A velocity defuzzification method for moving target, the method is applied in a MIMO radar, the radar comprises a plurality of transmitting antennas which are time division multiplexed and a plurality of receiving antennas which are time division multiplexed, wherein the method comprises the steps of:

   acquiring echo signals of a same moving target received by a first group of virtual multiplexing array elements and a second group of multiplexing array elements in an antenna array consisting of the plurality of transmitting antennas and the plurality of receiving antennas, wherein a pulse signal period corresponding to the first group of virtual multiplexing array elements is different from a pulse signal period corresponding to the second group of virtual multiplexing array elements;
   acquiring, according to the echo signals, a first measured motion phase difference corresponding to the first group of virtual multiplexing array elements and a second measured motion phase difference corresponding to the second group of virtual multiplexing array elements;
   calculating the Doppler frequency of the moving target according to the first measured motion phase difference and the second measured motion phase difference;
   calculating the current velocity of the moving target according to the Doppler frequency.

2. The method according to claim 1, wherein the first group of virtual multiplexing array elements comprises two transmitting antennas combined with at least one receiving antenna, the second group of virtual multiplexing array elements also comprises two transmitting antennas combined with at least one receiving antenna.

3. The method according to claim 2, wherein the first group of virtual multiplexing array elements comprises a first target transmitting antenna and a second target transmitting antenna combined with at least one receiving antenna, the second group of virtual multiplexing array elements comprises the second target transmitting antenna and a third target transmitting antenna combined with at least one receiving antenna, and a signal period of the pulse signal transmitted by the second target transmitting antenna is different from a signal period of the pulse signal transmitted by the third target transmitting antenna.

4. The method according to claim 3, wherein the first target transmitting antenna and the second target transmitting antenna are adjacent in transmission sequences, the second target transmitting antenna and the third target transmitting antenna are adjacent in transmission sequences.

5. The method according to claim 2, wherein the step of acquiring, according to the echo signals, a first measured motion phase difference corresponding to the first group of virtual multiplexing array elements and a second measured motion phase difference corresponding to the second group of virtual multiplexing array elements, comprises:

generating a range-Doppler image of each channel corresponding to the first group of virtual multiplexing array elements and a range-Doppler images of each channel corresponding to the second group of virtual multiplexing array elements according to the echo signals, and performing incoherent accumulation on the range-Doppler images;

obtaining, from the incoherent accumulated range-Doppler images, the first target range Doppler unit position data of the moving target in each channel corresponding to the first group of virtual multiplexing array elements and the second target range Doppler unit position data of the moving target in each channel corresponding to the second group of virtual multiplexing array elements;

obtaining the first measured motion phase difference according to the complex data of the first target range Doppler unit position data, and obtaining the second measured motion phase difference according to the complex data of the second target range Doppler unit position data.

6. The method according to claim 5, wherein the step of obtaining the first measured motion phase difference according to the complex data of the first target range Doppler unit position data, and obtaining the second measured motion phase difference according to the complex data of the second target range Doppler unit position data, comprises:

obtaining a plurality of motion phase differences for each channel according to the complex data of the first target range Doppler unit position data in each channel corresponding to the first group of virtual multiplexing array elements, and taking the average of the plurality of motion phase differences as the first measured motion phase difference;

obtaining a plurality of motion phase differences for each channel according to the complex data of the second target range Doppler unit position data in each channel corresponding to the second group of virtual multiplexing array elements, and taking the average of the plurality of motion phase differences as the second measured motion phase difference.

7. The method according to claim 6, wherein the step of obtaining a plurality of motion phase differences for each channel according to the complex data of the first target range Doppler unit position data in each channel corresponding to the first group of virtual multiplexing array elements, and taking the average of the plurality of motion phase differences as the first measured motion phase difference, comprises:

for each channel corresponding to the first group of virtual multiplexing array elements, if the complex datas of the target range Doppler unit position data in different channels corresponding to the pulse signal transmitted by one of the two transmitting antennas which constitute the first group of virtual multiplexing array elements are expressed as $\alpha_1, \alpha_2, \alpha_3, \cdots, \alpha_n$, and the complex datas of the target range Doppler unit position data in different channels corresponding to the pulse signal transmitted by the other one of the two transmitting antennas which constitute the first group of virtual multiplexing array elements are expressed as $\beta_1, \beta_2, \beta_3, \cdots, \beta_n$, then calculating the first measured motion phase difference $\psi_1$ according to the following equation:

$$\psi_1 = \frac{\beta_1 \cdot \alpha_1^* + \beta_2 \cdot \alpha_2^* + \cdots + \beta_n \cdot \alpha_n^*}{n},$$

where " * " represents a conjugate operation, and n represents total number of channels corresponding to the first group of virtual multiplexing array elements.

8. The method according to claim 7, wherein the step of obtaining a plurality of motion phase differences for each channel according to the complex data of the second target range Doppler unit position data in each channel corresponding to the second group of virtual multiplexing array elements, and taking the average of the plurality of motion phase differences as the second measured motion phase difference, comprises:

for each channel corresponding to the second group of virtual multiplexing array elements, if the complex datas of the target range Doppler unit position data in different channels corresponding to the pulse signal transmitted by one of the two transmitting antennas which constitute the second group of virtual multiplexing array elements are expressed as $\chi_1, \chi_2, \chi_3, \cdots, \chi_n$, and the complex datas of the target range Doppler unit position data in different channels corresponding to the pulse signal transmitted by the other one of the two transmitting antennas which constitute the second group of virtual multiplexing array elements are expressed as $\delta_1, \delta_2, \delta_3, \cdots, \delta_n$, then calculating the second measured motion phase difference $\psi_2$ according to the following equation:

$$\psi_2 = \frac{\chi_1 \cdot \delta_1^* + \chi_2 \cdot \delta_2^* + \cdots + \chi_n \cdot \delta_n^*}{n},$$

where " * " represents a conjugate operation, and n represents total number of channels corresponding to the second group of virtual multiplexing array elements.

9. The method according to claim 8, wherein the step of calculating the Doppler frequency of the moving target according to the first measured motion phase difference and the second measured motion phase difference, comprises:

calculating the differential phase difference according to the following equation:

$$\Delta \psi = \psi_1^* \cdot \psi_2,$$

where $\Delta\psi$ represents the differential phase difference, $\psi_1$ represents the first measured motion phase difference, $\psi_2$ represents the second measured motion phase difference, " * " represents a conjugate operation.

10. The method according to claim 9, wherein the step of calculating the Doppler frequency of the moving target according to the first measured motion phase difference and the second measured motion phase difference further comprises:

calculating the phase angle of the differential phase difference;
calculating the Doppler frequency of the moving target according to the phase angle.

11. The method according to claim 10, wherein the step of calculating the Doppler frequency of the moving target according to the first measured motion phase difference and the second measured motion phase difference further comprises:

calculating the Doppler frequency of the moving target according to the following equation:

$$f_d = \frac{angle(\Delta \psi)}{2 \cdot \pi \cdot \Delta T},$$

where $f_d$ represents the Doppler frequency of the moving target, the function angle() is to return the phase angle of a vector, and the unit of the phase angle is radians, $\Delta\psi$ represents the differential phase difference, $\Delta T$ represents the difference between the pulse signal period corresponding to the first group of virtual multiplexing array elements and the pulse signal period corresponding to the second group of virtual multiplexing array elements.

12. The method according to claim 11, wherein the step of calculating the current velocity of the moving target according to the Doppler frequency, comprises:

calculating the current velocity of the moving target according to the following equation:

$$V = -f_d \cdot \lambda / 2,$$

where V represents the current velocity of the moving target, $f_d$ represents the Doppler frequency of the moving target, $\lambda$ represents wavelength.

13. A velocity defuzzification apparatus for moving target, the apparatus is applied in a MIMO radar, the radar comprises a plurality of transmitting antennas which are time division multiplexed and a plurality of receiving antennas which are time division multiplexed, wherein the apparatus comprises:

a signal transmission module, configured to acquire echo signals of a same moving target received by a first group of virtual multiplexing array elements and a second group of multiplexing array elements in an antenna array comprising the plurality of transmitting antennas and the plurality of receiving antennas, wherein a pulse signal period corresponding to the first group of virtual multiplexing array elements is different from a pulse signal period corresponding to the second group of virtual multiplexing array elements;
a motion phase difference acquisition module, configured to acquire a first measured motion phase difference corresponding to the first group of virtual multiplexing array elements and a second measured motion phase difference corresponding to the second group of virtual multiplexing array elements according to the echo signals; a Doppler frequency calculation module, configured to calculate the Doppler frequency of the moving target according to the first measured motion phase difference and the second measured motion phase difference; a velocity calculation module, configured to calculate the current velocity of the moving target according to the Doppler frequency.

14. An electronic device, comprising a memory, a processor, and a computer program stored in the memory and capable of running on the processor, wherein the processor is configured to implement the velocity defuzzification method for moving target as claimed in any one of claim 1 to 12 when executing the program.

15. A non transient computer-readable storage medium, with a computer program stored thereon, wherein the computer program is configured to implement the velocity defuzzification method for moving target as claimed in any one of claim 1 to 12 when being executed by the processor.

Acquire echo signals of a same moving target received by a first group of virtual multiplexing array elements and a second group of multiplexing array elements in an antenna array consisting of multiple transmitting antennas and multiple receiving antennas, wherein a pulse signal period corresponding to the first group of virtual multiplexing array elements is different from that corresponding to the second group of virtual multiplexing array elements

~ 101

Acquire, according to the echo signals, a first measured motion phase difference corresponding to the first group of virtual multiplexing array elements and a second measured motion phase difference corresponding to the second group of virtual multiplexing array elements

~ 102

Calculate the Doppler frequency of the moving target according to the first measured motion phase difference and the second measured motion phase difference

~ 103

Calculate the current velocity of the moving target according to the Doppler frequency

~ 104

Figure 1

transmitting antennas

receiving antennas

virtual array

Figure 2

transmitting antennas (A) (B) (C)

receiving antennas (1)(2)(3)(4)

virtual array (A1)(A2)(A3)(A4/B1)(B2)(B3)(B4/C1)(C2)(C3)(C4)

Figure 3

frequency

Figure 4

| 201 | 202 | 203 | 204 |
|---|---|---|---|
| signal transmission module | motion phase difference acquisition module | Doppler frequency calculation module | velocity calculation module |

Figure 5

## INTERNATIONAL SEARCH REPORT

| International application No. |
|---|
| **PCT/CN2022/086823** |

| A. | CLASSIFICATION OF SUBJECT MATTER |
|---|---|
| | G01S 13/58(2006.01)i |

According to International Patent Classification (IPC) or to both national classification and IPC

| B. | FIELDS SEARCHED |
|---|---|

Minimum documentation searched (classification system followed by classification symbols)

G01S 13/+,; G01S 7/+

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI, 万方, WANFANG, 百度学术, BAIDU SCHOLAR: 雷达, 速度, 模糊, 多普勒, 复用, 时分, 分时, 虚拟, 相位差, MIMO, radar, speed, velocity, Doppler, TDM, phase, difference

| C. | DOCUMENTS CONSIDERED TO BE RELEVANT | |
|---|---|---|
| Category* | Citation of document, with indication, where appropriate, of the relevant passages | Relevant to claim No. |
| X | CN 113093131 A (HUAWEI TECHNOLOGIES CO., LTD.) 09 July 2021 (2021-07-09) description, paragraphs [0077]-[0093], [0101] and [0216] | 1-4, 13-15 |
| Y | CN 113093131 A (HUAWEI TECHNOLOGIES CO., LTD.) 09 July 2021 (2021-07-09) description, paragraphs [0077]-[0093], [0101] and [0159]-[0167] | 5-12 |
| Y | CN 113777577 A (HAWKEYE TECHNOLOGY CO., LTD. et al.) 10 December 2021 (2021-12-10) description, paragraphs [0052]-[0062] | 5-12 |
| A | EP 2574957 A1 (THALES SA.) 03 April 2013 (2013-04-03) entire document | 1-15 |
| A | CN 113945902 A (HAWKEYE TECHNOLOGY CO., LTD. et al.) 18 January 2022 (2022-01-18) entire document | 1-15 |
| A | CN 109975806 A (XI'AN CETC XIDIAN UNIVERSITY RADAR TECHNOLOGY COLLABORATIVE INNOVATION INSTITUTE CO., LTD.) 05 July 2019 (2019-07-05) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 June 2022** | **29 June 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

International application No.

**PCT/CN2022/086823**

| Patent document cited in search report | | | Publication date (day/month/year) | Patent family member(s) | | | Publication date (day/month/year) |
|---|---|---|---|---|---|---|---|
| CN | 113093131 | A | 09 July 2021 | WO | 2021129581 | A1 | 01 July 2021 |
| CN | 113777577 | A | 10 December 2021 | | None | | |
| EP | 2574957 | A1 | 03 April 2013 | FR | 2980852 | A1 | 05 April 2013 |
| CN | 113945902 | A | 18 January 2022 | | None | | |
| CN | 109975806 | A | 05 July 2019 | | None | | |

Form PCT/ISA/210 (patent family annex) (January 2015)